# EUROPEAN PATENT APPLICATION

(11) **EP 0 852 911 A2**
(43) Date of publication of application: **15.07.1998**
(21) Application number: 98610002.2
(22) Date of filing: 14.01.1998
(51) Int. Cl.: A23L 1/185, A23P 1/14, A23L 1/314, A23L 1/308, A23L 1/10

(54) **A process for preparing a particulate product from spent grains and a particulate product obtainable by said method**

(30) Priority: 14.01.1997 DK 1597
(71) Applicant: Aarup, Anton, 6920 Videbaek (DK)
(72) Inventor: Aarup, Anton, 6920 Videbaek (DK)
(74) Representative: Bagger-Soerensen, Birgitte

(57) **Abstract**

The present invention relates to a method for preparing a particulate product from spent grains, said product being usable for the preparation of a foodstuff. The particulate product is prepared by subjecting moist spent grains to a substantially momentary heating such that at least a part of the plant cells of the spent grains bursts.

## Description

The present invention relates to a method for preparing a particulate product from spent grains, a particulate product obtainable by said method, a foodstuff comprising such a particulate product and the use of the particulate product for preparing a foodstuff.

Beer is traditionally made from germinated barley (malt), raw grain, water and yeast. The germinated barley is first ground to sufficiently expose the endosperm without grinding the husks too finely in consideration of the fact that they are to be removed later to serve as filter aid at the subsequent filtering. Normally, grinding is carried out to an average particle size of from only a few 1/10 mm to a few mm, preferably to a particle size of 1-3 mm.

Grinding may be performed as a dry or a wet grinding. In the wet grinding, the malt has been allowed to imbibe water, which makes the husks less brittle and unlikely to splinter during grinding.

After the grinding, mashing is carried out. The main principle of mashing is that a mixture of ground malt, water and possible raw grains are heat-treated in such a way that an extract and a solid phase are obtained. At the mashing, the enzymes of the malt get an opportunity of being active. These enzymes comprise primarily proteases, α-amylases and β-amylases. The heat-treatment may follow various temperature courses depending on which enzymes are desired to be active.

The heat-treatment can be made both directly and indirectly. At the direct heating it is preferred to conduct aqueous vapour to the mash tun. By the indirect heat-treatment the mash tun is supplied with heat from outside. To avoid heat-damage, for instance complete or partial inactivation of the enzyme processes, it is preferred to heat-treat the barley malt by indirect heating.

After the mashing, the liquid phase (the beer wort), which contains dissolved dry matter (extract), is separated from the insoluble components (the spent grains). This separation may for instance be made in a sieve tun, a filter press or other filtering equipment. By filtering in a sieve tun the husks will precipitate in such a way that they form a porous filter cake which acts as filtering aid. After the filtration the husks normally have a residual content of fermentable sugar of 4 to 6% by weight. Therefore, washing with hot water may be performed for extracting the sugar. The washing liquid may be added to the wort, following which the complete liquid phase may be used in the following process for the preparation of beer. The amount of dry matter in the wort depends i.a. on the chosen heat-treatment method, condensed aqueous vapour at the direct heating contributing to the total volume of wort. If direct heating is applied, the resulting beer wort typically has a content of dry matter of 8 to 10% by weight.

After the washing, the spent grains typically have a residual content of fermentable sugar of less than 1% by weight. The spent grains usually constitute approx. 12-13% by weight of the barley malt and comprises for instance components from the grain wall, seed shells, embryos, scutellum and aleurone.

The spent grains which contain the non-decomposed and insoluble cell components from the malt and the raw grains have up till now to some extent been used as cattle feed in spite of the fact that the feed value is very low. However, spent grains constitute in many places a problematic waste product which has to be disposed of.

It has now surprisingly turned out to be possible, by a particular method, to transform the spent grains into a particulate product which may for instance be used for human foodstuff. By this method the useful vegetable proteins and fibres are made accessible for nourishing of humans.

Thus, the present invention relates to a method for preparing a particulate product from spent grains, which method is characterized in that moist spent grains are subjected to a substantially momentary heating such that at least a part of the plant cells of the spent grains bursts.

The moist spent grains, from the sieve tun or after washing, have for instance a content of dry matter of 20 to 30% by weight and may, if desired, be used directly in the method according to the invention. It is, however, preferred to dehydrate the moist spent grains in for instance a screw press to increase the content of dry matter to for instance 40 to 60% by weight, in particular approx. 50% by weight. Reduction of the water content results in less energy consumption at the heat-treatment.

The spent grains may, if desired, be comminuted prior to the heat-treatment.

By the term "substantially momentary heating" is in the present description with claims to be understood such a type of heating, in which the water contained in the cells is transformed into vapour such that a bursting of the cells takes place. It is assumed that the bursting of the cells takes place as a consequence of the fact that within the cells such a high steam pressure is created during the heating that the cell walls cannot resist said pressure.

By "bursting of at least a part of the plant cells of the spent grains" is, in the present description with claims, to be understood a disintegration of the plant cell walls, at least to such an extent that it is ensured that the product acquires the desired property.

The temperature of the heating is thus to be above the boiling point of water, preferably above 180°C. It is, however, not possible to state a given minimum temperature for the occurrence of said bursting, factors like atmospheric humidity, air velocity around the particles, dry matter content of the mash, etc. being of vital importance.

After the heat-treatment of the spent grains, such that the cells burst, the product obtained may be used as such in the further preparation, but it is preferred to dry the product for the attainment of a product which is stable when stored.

In a preferred embodiment the heating takes place in an oven. Energy is here transferred from the hot air in the oven to the moist spent grains by passive diffusion. It is in particular preferred to use a so-called conveyor oven, in which a belt continuously runs through an oven with a given length and in which the residence time in the oven may be controlled by the speed of the belt. It is in particular preferred to use a conveyor oven, in which the temperature may be varied over its length.

The moist spent grains are preferably provided in the oven in a homogenous thickness. If a big thickness is used, the residence time has to be adjusted in accordance therewith to ensure a sufficiently quick attainment of a high core temperature. It is preferred to use a comparatively thin layer of between 3 mm and 3 cm, preferably approx. 1 cm, to avoid or minimize problems of heat transfer through the layer of spent grains.

Prior to the heat-treatment, the layer of spent grains has normally room temperature. At the inlet to the conveyor oven, the temperature is set relative to the thickness of the layer, the air humidity, the water content of the spent grains, etc., such that a sufficiently quick heating takes place to ensure that the plant cells of the spent grains burst. Preferably a temperature from 180°C to 260°C is chosen, for instance approx. 220°C at a layer thickness of approx. 1 cm, a content of dry matter of 50% by weight and a probable atmospheric humidity of substantially 100% in the immediate vicinity of the cells.

After the initial heating for bursting the plant cells of the spent grains, it is preferred to subject the still moist product to a drying. In a conveyor oven it is preferred to perform this drying by lowering the temperature relative to the temperature used for the initial heating to avoid heat damage of the product obtained. It is in particular preferred to let the temperature drop substantially evenly throughout the oven, such that the temperature at the outlet of the conveyor oven is between 100°C to 150°C. By letting the temperature drop evenly it is taken into account that due to the increasing evaporation of water from the moist product, the remaining part gets a lower potential for absorbing energy from the surrounding air in the oven. It has turned out that substantially no heat damage of the obtained product takes place by letting the temperature drop evenly in the manner described above.

The residence time in the conveyor oven may vary according to the other process conditions. Usually, a residence time of 3 to 15 minutes is adequate, in particular 5 to 8 minutes. In particular, a residence time of approx. 6 minutes at an inlet temperature of approx. 220°C, said temperature dropping evenly to an outlet temperature of 120°C, a content of dry matter of approx. 50% by weight of the spent grains and a layer thickness of approx. 1 cm are preferred.

The particulate product obtained has, when viewed in a microscope, a porous structure. If desired, the product can be comminuted into a suitable size depending on the contemplated later use.

In another preferred embodiment of the method according to the invention the heat-treatment consists in fluidization of the wet spent grains in hot air. Hereby, the particles of the wet spent grains get a big surface area such that a quick transfer of heat can take place and consequently a quick heating of the spent grains. The heat-treated particles may for instance be separated from the moist air in a cyclone. By using fluidization very short heat-treatment periods are obtained and consequently a reduced risk of heat damage to the product.

It is preferred to combine the heat-treatment by fluidization with comminution of the moist spent grains, such that a smaller product is obtained. Such a smaller product will have a bigger surface area and, therefore, shorter heat-treatment periods. The comminution takes preferably place simultaneously with the fluidization, for instance in a beater drum-like device, in which the spent grains are simultaneously comminuted and distributed in the air current.

The drying air has, when entering the drying chamber immediately prior to the contact with the wet spent grains, preferably a temperature in the range from 180°C to 240°C, for instance approx. 200°C. At the outlet of the drying chamber the drying air has with a content of aqueous vapour and dried product, preferably a temperature of 120°C to 200°C, in particular 140°C to 180°C. The dried product usually has a temperature of 70°C to 100°C.

The dried product is separated from the air current and the aqueous vapour in for instance cyclones. By using cyclones rather than other types of devices for separation, a classification of the product is further obtained such that the smallest components are left out from the commercial product. Thus, the commercial product becomes a more homogenous product which does not vary considerably in respect of particle size.

After the separation the product is cooled in for instance a fluidized bed to bring the temperature of the product down to approximately ambient temperature.

The product obtained by the method according to the invention usually has a content of protein of 20 to 50% by weight, in particular approx. 35 to 40% by weight. The proteins are present in all the anatomic parts of the spent grains, but the concentration differs, the major part being present in the embryo and the aleurone layer. In respect of the product according to the invention the proteins originate for the major part from the embryo part, the aleurone layer, the grain wall and the seed capsule. Besides, smaller amounts of glutamine and gliadine 45% and decomposition products of proteins are present.

The amino-acid composition of the proteins in the product according to the invention is characterized by a high content of glutamine acid and proline and a low content of lysine.

The product obtained by the method according to the invention has a comparatively high content of indigestible carbon hydrates, which are called fibres in the following, of 5 to 60% by weight, in particular 45 to 55% by weight. The fibres are primarily constituted by cellulose and originate for the major part from the grain capsule and the grain wall of the barley malt. The grain capsule consists i.a. of testa, hyaline layer and aleurone layer. The grain wall consists of several cell layers, the interior husks being fixedly joined with the grain wall.

Moreover, the product according to the invention contains a smaller amount of organic or inorganic salts which may possibly be adjusted during the preparation for the attainment of a product with desired properties as to taste and nutrition. The moisture content of the product according to the invention depends on the effectiveness of the drying, but the water content normally constitutes 8 to 16% by weight, in particular 10 to 14% by weight.

The product obtained by heat-treatment in a conveyor oven and by fluidization possesses the same basic properties, viz. good absorbent and emulsifying properties and low nutritional value. The inherent taste of the product is vigorous, rich and slightly sour. The product can be used for foodstuff, in which said absorbent and emulsifying properties are desired in combination with a low nutritional value and a high fibre content.

The product according to the invention may thus be used in a number of foodstuffs for the attainment of an improved quality as to taste and/or nutrition and for a reduction of overweight persons' energy intake or for making the foodstuff less expensive. Consequently, the present invention also relates to a foodstuff comprising the particulate product prepared as stated above and the use of the particulate product for the preparation of a foodstuff.

The product according to the invention may be used as a food supplement when fat-reducing properties are desired and the aqueous phase is dominant, like for instance in dressings, salads, sauces, tomato and paste dishes, breakfast cereals, bread and other types of pastry.

The product according to the invention may also form part of many foodstuffs as dry matter in a comparatively large amount without changing the properties of the finished foodstuff in a disadvantageous direc-tion. The product will typically be able to absorb water in an amount of up till ten times its own weight and to bind fat and oil in an amount of up to 4 times its own weight.

The product according to the invention will have substantially the same protein and amino-acid composition as normally present in vegetable products, which is an advantage both in respect of nutrition and marketing.

The product according to the invention may prior to use be swelled in a suitable liquid medium, like for instance saline water, which results, by a suitable choice of ratio between water and product, in the formation of a gel. This gel will in respect of certain types of articles of food result in a quicker and easier working in at the mixing with the remaining ingredients. The good absorbent properties makes the product according to the invention well suited in articles of food, in which a low oil and fat content is desired.

When used in for instance meat products, good eating properties are obtained, like for instance a good structure, a good mouth feeling, and the meat product has at the same time a low energy content.

If desired, the taste of the product according to the invention may be changed, for instance by letting the product prepared according to the invention, absorb, prior to use, lipophilic compounds like oleoresins extracted from oleaginous spices. By such a pretreatment the particulate product according to the invention does not lose its particulate nature and its absorbent property. This property of binding oleoresins may for instance be used for the preparation of spices which can be used for making for instance dressings and sauces.

The product according to the invention may be sold as such or it may be sold in a mixture with dextrose, phosphates, spices or other ingredients which are normally used in such articles of food, for which the product is intended.

In the following, the invention will be described in detail with reference to the examples and the accompanying drawings, in which
Fig. 1 is a diagram showing the principles of a plant for preparation of a particulate product in a conveyor oven, and
Fig. 2 is a diagram showing the principles of a plant for preparation of a particulate product by fluidization.

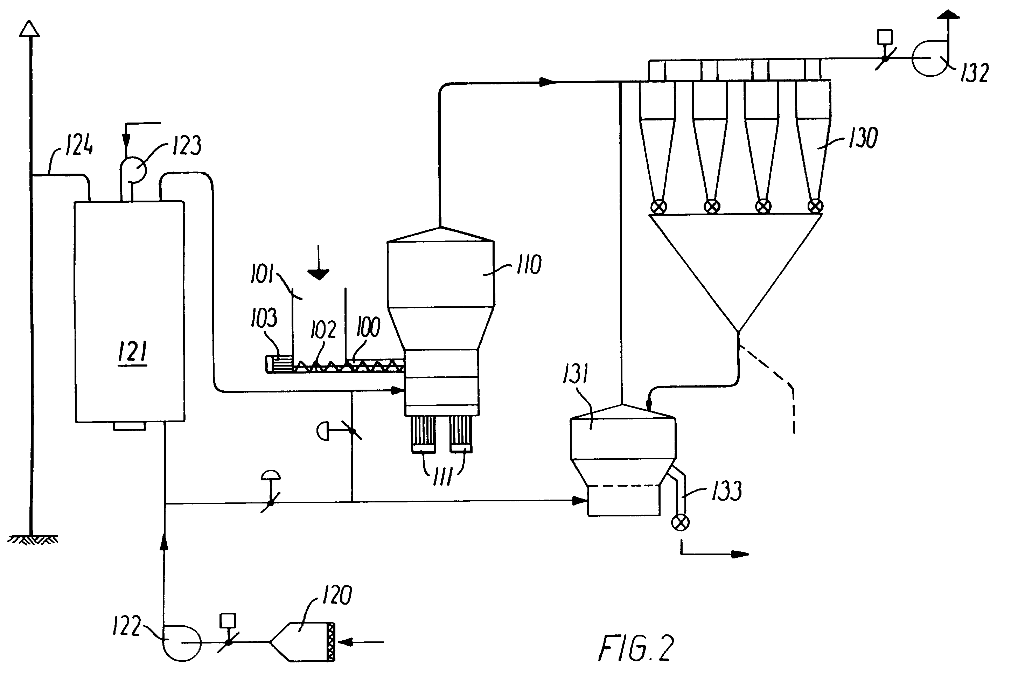

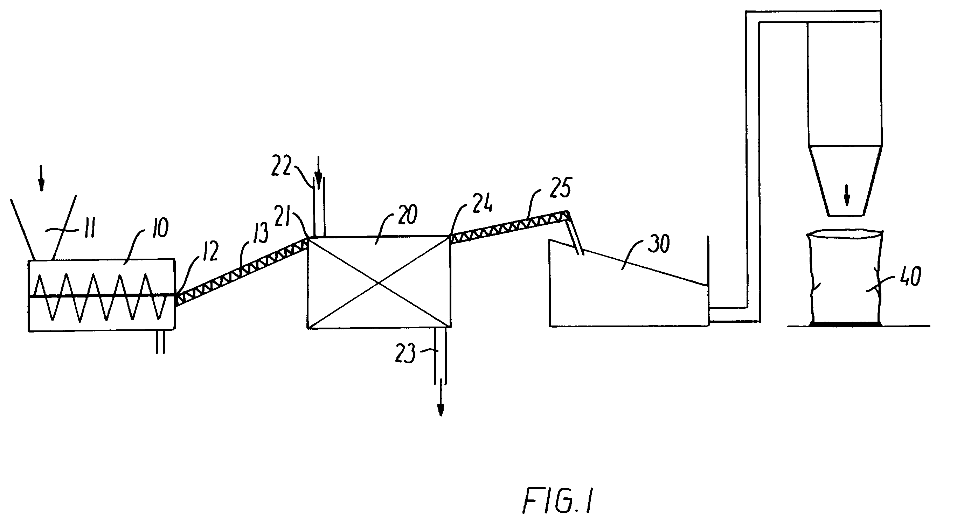

In the plant shown in Fig. 1 spent grains from brewing are conveyed to an inlet 11 of a screw press 10 for reduction of the water content. The pressed off water is drained off at an outlet 14. The spent grains with increased dry matter content are taken out of the screw press at the outlet 12 and then conducted via a conveyor belt 13 to a conveyor oven 20. The moist spent grains are introduced at the inlet 21. In the conveyor oven the spent grains are conveyed at a constant speed. Hot air is introduced at the inlet 22 and the colder air which has been enriched by aqueous vapour leaves the conveyor oven at the outlet 23. The heat-treated spent grains leave the conveyor oven at the outlet 24 and is via conveyor belts 25 conveyed to an apparatus 30 for grinding and sieving. The ground and sieved product is then taken to 40 to be put in sacks.

In the plant shown in Fig. 2 moist spent grains are conveyed to a screw press 100 through a funnel 101. By means of a screw 102 driven by an electromotor 103, the moist spent grains are then conveyed to a drying chamber 110.

A drying air is produced by taking in atmospheric air through an air filter at an inlet 120 of a fan 122 and is heated indirectly by a calorifier. The calorifier is run by gas which is combusted in a burner 123. The exhaust gas from the combustion is discharged through a pipe 124. The heated drying air is led to the drying chamber 110 at a point below the level of supply of moist mash.

The speed of the drying air in the drying chamber is established by two electromotors 111. The ascendent drying air pulls along the spent grains which leave the screw press 100, the moist spent grains being comminuted and distributed in the drying chamber by means of a beater drum device. The drying air with fluidized heat-treated spent grains are then conveyed to cyclones 130 in view of recovering and classifying the product. The product is cooled by fluidization in a bed 131 which receives cooling air from the fan 122. The air from the bed 131 is mixed with the heated drying air from the drying chamber 110 ahead of the cyclones 130. The air with a residue of small particles of the product, which leaves the cyclones, is led to a suction fan 132 and may then be discharged over a filter bag for removal of the remaining small particles. The dried and cooled particulate product is removed at the outlet 133.

In the following the invention will be explained in detail with reference to the following examples.

### Example 1

### Preparation of a particulate product in a conveyor oven.

Spent grains from barley malt were used with a content of residual sugar of below 1% by weight. The particle size was from a few tenth millimetres to a few millimetres, the major part of the fibres having a size of 1-3 mm. The dry matter content was approx. 30% by weight.

The moist spent grains were heat-treated in a plant as shown in Fig. 1. First the water content of the spent grains was reduced in a screw press, following which the dry matter content was approx. 50% by weight.

At the test a conveyor oven with a length of 30 meter and a belt width of 100 cm was used. It was possible to adjust the temperature over the whole length of the conveyor oven. Furthermore, it was possible to adjust the speed of the belt.

The belt was started and was during the entire test running at a constant speed through the oven. The speed was adjusted such that the residence time was 6 minutes in all. The spent grains, which resulted after the treatment in the screw press, were evenly distributed on the belt in the whole width of the belt in a thickness of approx. 1 cm, following which the belt with the spent grains was taken into the conveyor oven.

The temperature at the entrance of the oven was 220°C. The temperature dropped evenly through the oven to an outlet temperature of 120°C.

The resulting particulate product had a porous structure when viewed in a microscope.

### Example 2

### Preparation of a particulate product by fluidization.

The same type of spent grains as in example 1 was used. The water content was approx. 50% by weight.

The moist spent grains were treated in a plant as shown in Fig. 2. The spent grains were comminuted in the drying chamber, drying air being at the same time led to below the supply level of the spent grains. The comminuted particles of spent grains were carried away by the air current and the temperature of the drying air was at the outlet of the drying chamber 140°C to 180°C. This process was controlled by two temperature regulators. One temperature regulator kept the supply temperature of the drying air constantly at 200°C ± 10°C., and the other one controlled the outlet temperature within the range of 140°C to 180°C by adjusting the supply of moist spent grains to the drying chamber. The residence time for an average particle was approx. from 1 second to 4 seconds.

The resulting dry product had a particle size with a close particle distribution. The average particle size was approx. 200 *µ*m. The water content of the resulting product was approx. 8% by weight.

### Example 3

### Preparation of a Frankfurter with a low fat content.

A typical Danish recipe for the preparation of Frankfurters contains the following ingredients:

| | | |
|---|---|---|
| Lean meat | (fat content 25% by weight) | 20% by weight |
| Fat meat | (fat content 35% by weight) | 10% by weight |
| Jowl butts without rind | (fat content 55% by weight) | 10% by weight |
| Soft lard | (fat content 75% by weight) | 20% by weight |
| Machine-boned meat | (fat content 25% by weight) | 6% by weight |
| Protein gel (1:4) | (fat content 4% by weight) | 10% by weight |
| Potato flour | | 4% by weight |
| Soy isolate | | 2% by weight |
| Salt and spices | | 3% by weight |
| Water | | 15% by weight |
| Total | | 100% by weight |

The total fat content of this recipe is 30.9% by weight in the finished product.

By using the same recipe but with the following changes: 15% by weight of lean meat, no fat meat, 15% by weight soft lard, 5% by weight of potato flour and 3% by weight of soy isolate and 18% by weight of a gel obtained by mixing one part of the particulate product according to example 1 and four parts of water, a Frankfurter with comparable taste and consistency was obtained, but with a total fat content of only 22.4% by weight, corresponding to a reduction of the fat content relative to the typical Danish recipe of 37.9%.

## Claims

1. A method for preparing a particulate product from spent grains, **characterized** in that moist spent grains are subjected to a substantially momentary heating such that at least a part of the plant cells of the spent grains bursts.

2. A method according to claim 1, **characterized** in that the spent grains have a dry matter content of 20-60% by weight at the beginning of the heating, in particular a dry matter content of about 50% by weight.

3. A method according to claim 1 or 2, **characterized** in that the heating takes place by passive diffusion of energy from hot air to the moist spent grians in an oven, preferably a conveyor oven.

4. A method according to any of the claims 1 to 3, **characterized** in that the substantially momentary heating is succeeded by a cooling, during which the temperature drops evenly.

5. A method according to any of the preceding claims, **characterized** in that the temperature at the inlet of the conveyor oven is 180°C to 260°C, which temperature drops evenly through the conveyor oven to from 100°C to 150° at the outlet of the oven.

6. A method according to any of the preceding claims 1 or 2, **characterized** in that the heating takes place by fluidization of the wet spent grains in hot air.

7. A method according to claim 6, **characterized** in that the spent grains are comminuted substantially simultaneously with the heating.

8. A particulate product obtainable by the method according to claims 1 to 5.

9. A particulate product obtainable by the method according to claim 7.

10. Foodstuff comprising a particulate product according to claim 8 or 9.

11. Use of a particulate product obtainable by the method according to claims 1 to 7 for the preparation of a foodstuff.
